# EUROPEAN PATENT APPLICATION

(11) **EP 4 481 564 A1**
(43) Date of publication of application: **25.12.2024**
(21) Application number: 23755778.0
(22) Date of filing: 14.02.2023
(51) Int. Cl.: G06F 9/451

(54) **INTERACTION METHOD, INTERACTION APPARATUS, AND ELECTRONIC DEVICE**

(30) Priority: 16.02.2022 CN 202210140686
(71) Applicant: VIVO MOBILE COMMUNICATION CO., LTD., Dongguan, Guangdong 523863 (CN)
(72) Inventor: ZHOU, Yang, Dongguan, Guangdong 523863 (CN)
(74) Representative: Lavoix
(86) International application number: PCT/CN2023/075895
(87) International publication number: WO 2023/155776

(57) **Abstract**

This application discloses an interaction method, an interaction apparatus, and an electronic device, and pertains to the field of human-machine communication technologies. The interaction method includes: receiving a first input by a user to target application programs; in response to the first input, building a target component based on the target application programs and setting preset interfaces of the target application programs as target pages, the target pages being interfaces displayed correspondingly by the target application programs after the target component is started; receiving a second input by the user to the target component; and in response to the second input, starting the target component and displaying the target pages of the target application programs according to a preset layout interface.

## Description

### CROSS-REFERENCE TO RELATED APPLICATIONS

This application claims priority to Chinese Patent Application No. 202210140686.9, filed in China on February 16, 2022, which is incorporated herein by reference in its entirety.

### TECHNICAL FIELD

This application pertains to the field of human-machine communication technologies, and specifically relates to an interaction method, an interaction apparatus, and an electronic device.

### BACKGROUND

At present, if an electronic device wants to implement the functions of multiple application programs to meet the requirements in multiple scenarios, it is necessary to enable multiple application programs and perform setting up and switching between the multiple application programs, which is a cumbersome operation process and difficult to balance the multiple application programs.

### SUMMARY

An objective of embodiments of this application is to provide an interaction method, an interaction apparatus, and an electronic device, so as to solve a problem of cumbersome operation process in the prior art in which it is necessary to enable multiple application programs and perform setting up and switching between the multiple application programs to meet the usage requirements in multiple scenarios.

According to a first aspect, an embodiment of this application provides an interaction method, where the method includes:
receiving a first input by a user to target application programs;
in response to the first input, building a target component based on the target application programs and setting preset interfaces of the target application programs as target pages, the target pages being interfaces displayed correspondingly by the target application programs after the target component is started;
receiving a second input by the user to the target component; and
in response to the second input, starting the target component and displaying the target pages of the target application programs according to a preset layout interface.

According to a second aspect, an embodiment of this application provides an interaction apparatus, where the apparatus includes:
a first receiving module configured to receive a first input by a user to target application programs;
a building module configured to, in response to the first input, build a target component based on the target application programs and set preset interfaces of the target application programs as target pages, the target pages being interfaces displayed correspondingly by the target application programs after the target component is started;
a second receiving module configured to receive a second input by the user to the target component; and
a first display module configured to, in response to the second input, start the target component and display the target pages of the target application programs according to a preset layout interface.

According to a third aspect, an embodiment of this application provides an electronic device, where the electronic device includes a processor, a memory, and a program or instructions stored in the memory and capable of running on the processor, where when the program or instructions are executed by the processor, the steps of the method according to the first aspect are implemented.

According to a fourth aspect, an embodiment of this application provides a readable storage medium, where the readable storage medium has a program or instructions stored thereon, and when the program or instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions so as to implement the method according to the first aspect.

According to a sixth aspect, an embodiment of this application provides a computer program product, where the computer program product is stored in a storage medium, and the computer program product is executed by at least one processor to implement the steps of the method according to the first aspect.

In the embodiments of this application, target application programs are selected for building a target component, and initial pages of the target application programs in the target component are set as target pages, so that when the target component is started, the target pages of all target application programs in the target component are displayed according to a preset layout interface. In this way, various application program functions can be implemented through a single target component, and the user does not need to cumbersomely switch between multiple application programs. This simplifies the process of human-machine interaction and meets the requirements in multiple usage scenarios for the user.

### BRIEF DESCRIPTION OF DRAWINGS

FIG. 1 is a schematic flowchart of an interaction method according to an embodiment of this application;
FIG. 2 is a schematic diagram of building a target component according to an embodiment of this application;
FIG. 3 is a schematic diagram of a target page of a target application program according to an embodiment of this application;
FIG. 4 is schematic diagrams of associating a first function according to an embodiment of this application;
FIG. 5 is a schematic diagram of a first display style according to an embodiment of this application;
FIG. 6 is a schematic diagram of a first layout interface according to an embodiment of this application;
FIG. 7 is a schematic diagram of a second display style according to an embodiment of this application;
FIG. 8 is a schematic diagram of a second layout interface according to an embodiment of this application;
FIG. 9 is a schematic diagram of a third display style according to an embodiment of this application;
FIG. 10 is a schematic diagram of a third layout interface according to an embodiment of this application;
FIG. 11 is a schematic diagram of a target page of a second target application program according to an embodiment of this application;
FIG. 12 is a schematic diagram of relevance of messages according to an embodiment of this application;
FIG. 13 is a schematic diagram of topics according to an embodiment of this application;
FIG. 14 is a schematic structural diagram of an interaction apparatus according to an embodiment of this application;
FIG. 15 is a schematic structural diagram of an electronic device according to an embodiment of this application; and
FIG. 16 is a schematic diagram of a hardware structure of an electronic device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that data used in this way are interchangeable in appropriate circumstances so that the embodiments of this application can be implemented in an order other than those illustrated or described herein. In addition, "first" and "second" are typically used to distinguish objects of a same type and do not limit quantities of the objects. For example, there may be one or more first objects. In addition, "and/or" in the specification and claims represents at least one of connected objects, and the character "/" generally indicates an "or" relationship between the contextually associated objects.

The interaction method, interaction apparatus, and electronic device provided in the embodiments of this application are hereinafter described in detail by using specific embodiments and application scenarios thereof with reference to the accompanying drawings.

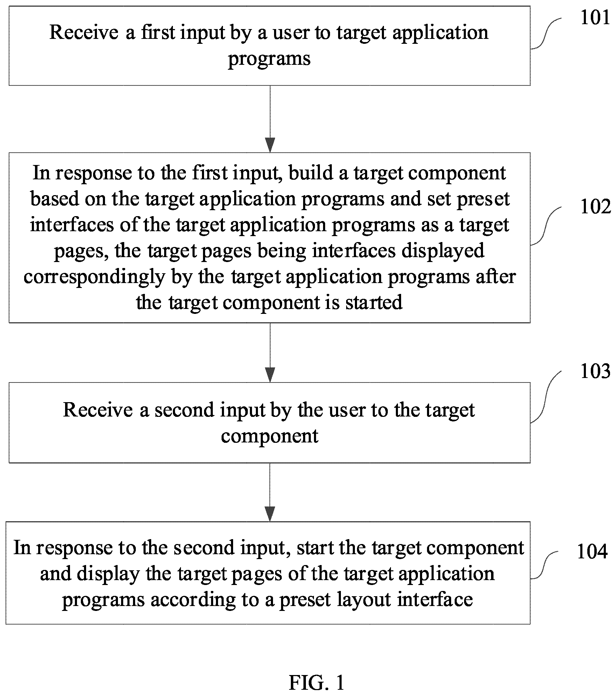

Referring to FIG. 1, FIG. 1 is a schematic flowchart of an interaction method according to an embodiment of this application. As shown in FIG. 1, an embodiment according to an aspect of this application provides an interaction method. The method includes the following steps.

Step 101: Receive a first input by a user to target application programs.

Step 102: In response to the first input, build a target component based on the target application programs and set preset interfaces of the target application programs as target pages, the target pages being interfaces displayed correspondingly by the target application programs after the target component is started.

In this embodiment of this application, there may be one target application program, or two or more target application programs. If an electronic device receives a first input by a user to target application programs, where, for example, the first input includes a first sub-input of tapping a target application program icon, or the first input includes a first sub-input of dragging the target application program icon from a first display region to a second display region, and the form of the first sub-input is not specifically limited in this embodiment of this application, the electronic device responds to the first sub-input by using the target application program to build a target component and sets preset interfaces of the target application programs as target pages, the target component being a kind of component. When the target component is started, target application programs that make up the target component are started, and the target pages are interfaces displayed correspondingly by the target application programs after the target component has been started, that is, initial interfaces, thereby simultaneously implementing a variety of application program functions or utilizing the cooperation between the target application programs to implement new functions. In addition, a corresponding interface for each target application program started can be set by the user independently, which helps to meet personalized requirements of the user and quickly open a corresponding interface.

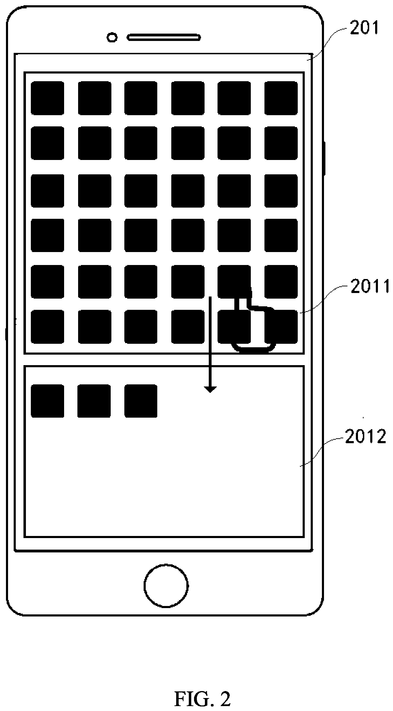

Referring to FIG. 2, FIG. 2 is a schematic diagram of building a target component according to an embodiment of this application. As shown in FIG. 2, the electronic device displays a settings interface 201 for the target component. The settings interface 201 is divided into two display regions, namely a first display region 2011 and a second display region 2012. Icons of all the application programs on the electronic device are displayed in the first display region 2011, and icons of the target application programs that make up the target component are displayed in the second display region 2012. In other words, the user can drag an icon of an application program from the first display region 2011 to the second display region 2012, and utilize the application program corresponding to the icon in the second display region 2012 to build the target component. An icon of an application program in the first position can refer to a main application program of the target component, while the others are sub-application programs.

In this embodiment, after the first sub-input, the target application programs may be started to display their application interfaces. The first input also includes a second sub-input on a page of a target application program started. For example, a setting control is displayed on the page of the target application program started, and with an input to the setting control, a page can be set as an initial interface displayed correspondingly by the target application program after the target component is started; in other words, the second sub-input is an input to set a preset interface of the target application program as a target page. The form of the second sub-input is not specifically limited in this embodiment. In response to the second sub-input, the electronic device sets the preset interface of the target application program as a target page; in other words, when the target component is started, the target application programs that make up the target component are started and display the target pages.

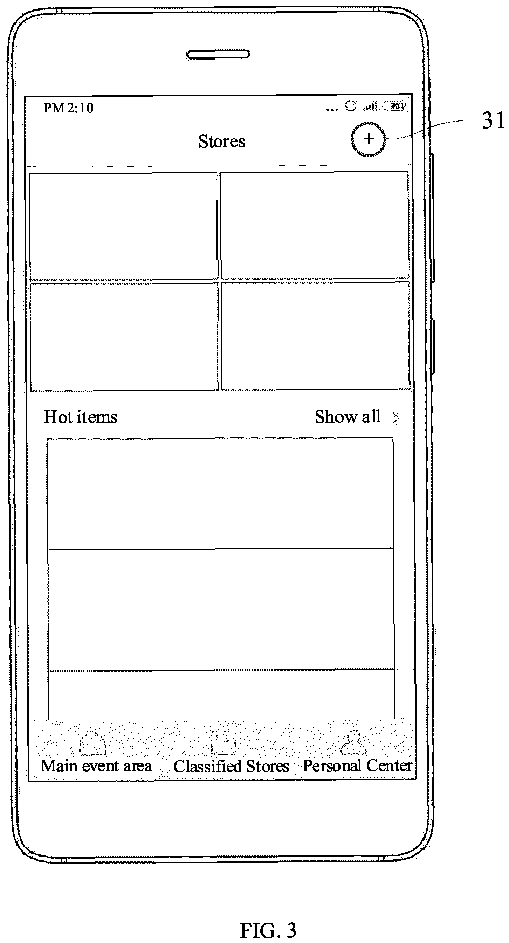

Referring to FIG. 3, FIG. 3 is a schematic diagram of a target page of a target application program according to an embodiment of this application. As shown in FIG. 2 and FIG. 3, for example, after an icon of an application program is dragged from the first display region 2011 to the second display region 2012, the application program automatically starts and displays its application page, and the user can select any page as the target page or set an initial page of the application program as the target page. For example, in FIG. 3, a setting control 31 is displayed in the upper right corner of the application page of the target application program, and if the user wants to set a current application page as the target page, this can be achieved by simply tapping the setting control 31.

Step 103: Receive a second input by the user to the target component.

Step 104: In response to the second input, start the target component and display the target pages of the target application programs according to a preset layout interface.

In this embodiment of this application, after the target component is built, the target component may be displayed on the desktop of the electronic device. If a second input by the user to the target component is received, where, for example, the second input is an input of tapping the target component, or the like and is not specifically limited in this embodiment of this application, the electronic device responds to the second input by starting the target component and displaying target pages of all target application programs in the target component according to a preset layout interface. In other words, with the second input to the target component, all the application programs that make up the target component can be started simultaneously, helping the user to operate, and the target pages of the target application programs are displayed according to the preset layout interface. The preset layout interface is made up of target pages. For example, the target pages are displayed in separate regions or in a cascade, or the like. Certainly, alternatively, target pages of some target application programs may be displayed while for the other target application programs, only their corresponding icons are displayed.

In this way, by building a target component and starting the target component, the user can achieve the effect of simultaneously starting multiple target application programs and triggering the functions of the multiple application programs. In addition, target pages of the target application programs are displayed in a preset layout interface, so that the user can simultaneously view target pages of multiple target application programs, eliminating the cumbersome operation of switching back and forth between application programs.

In this embodiment of this application, target application programs are selected for building a target component, and initial pages of the target application programs in the target component are set as target pages, so that when the target component is started, the target pages of target application programs in the target component are displayed according to a preset layout interface. In this way, various application program functions can be implemented through a single target component, and the user does not need to cumbersomely switch between a plurality of application programs. This simplifies the process of human-machine interaction and meets the requirements in multiple usage scenarios for the user.

In some embodiments of this application, after the building a target component based on the target application programs, the method further includes:
receiving a third input by the user to a first target application program in the target component; and
in response to the third input, associating a first function of the first target application program with a second target application program in the target component, the first function being triggered in the second target application program when the target component is started.

In the embodiments, after the target component is built, if the third input by the user to the first target application program in the target component is received, where, for example, the third input is an input of dragging an icon of the first target application program in the target component to overlap at least partially with an icon of the second target application program, or the third input is an input of tapping the icon of the first target application program in the target component and then tapping the icon of the second target application program, the electronic device responds to the third input by associating the first function of the first target application program with the second target application program. The association here means that when the target component is started, the first function will be triggered and take effect in the second target application program. For example, the first target application program is a positioning-based application program, the second target application program is an instant messaging application program, and after the foregoing operation, a positioning function is started in real-time in the second target application program. For another example, the first target application program is a camera, the second target application program is a social platform application program, and after the foregoing operation, when the target component is started, a shooting function is started instantly in the second target application program. In this way, the target component allows users to complement the functions of different application programs to meet the requirements in multiple usage scenarios and to generate new functions.

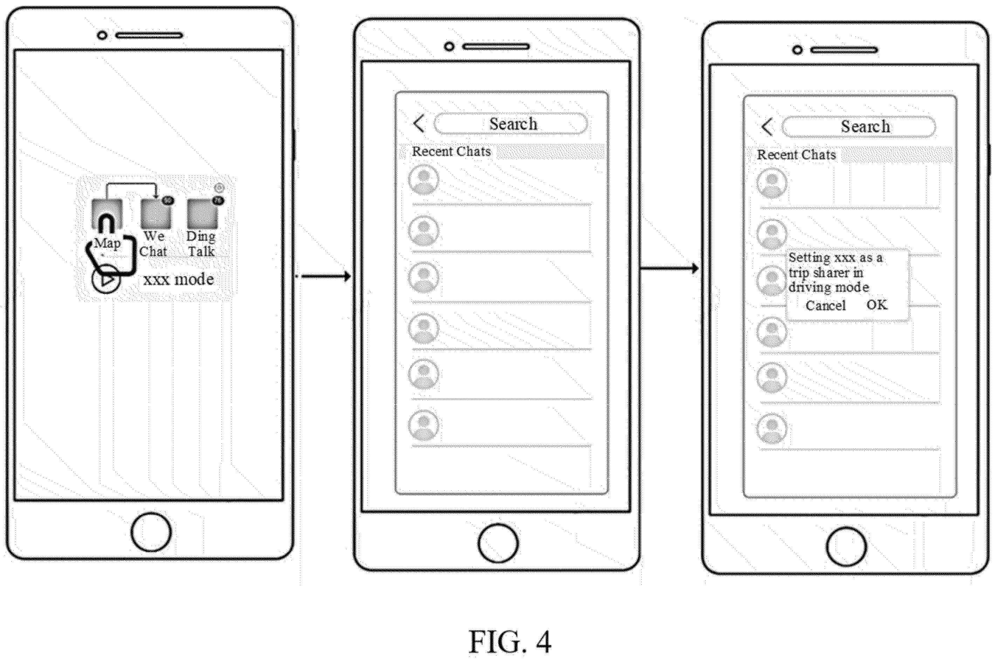

Referring to FIG. 4, FIG. 4 is schematic diagrams of associating a first function according to an embodiment of this application. As shown in FIG. 4, in some embodiments of this application, the third input is an input of dragging an icon of the first target application program to overlap at least partially with an icon of the second target application program, where the first target application program is a map and the second target application program is an instant messaging application program. The electronic device responds to the third input by popping up an application interface of the second target application program, in which multiple contacts are displayed. The user can select contacts for which position sharing is required, and after contact selection, a confirmation window is popped up. Upon confirmation, the association setting of the first function, that is, the positioning function, can be completed. Afterwards, position information is shared in real-time in the selected contacts in the second target application program when the user starts the target component.

In some other embodiments of this application, after the building a target component based on the target application programs, the method further includes:
displaying a target component icon, the target component icon containing icons of the target application programs;
receiving a fourth input by the user to the target component icon; and
in response to the fourth input, updating a display style of the target component icon, where a different display style corresponds to a different layout interface shown when the target component is started.

In other words, in the embodiments of this application, the user in different scenarios has different needs for the layout interface after the target component is started, and the user can switch between different layout interfaces by switching between display styles of the target component. For example, after the target component is built, the target component icon may be displayed on the desktop of the electronic device. The target component icon contains icons of all target application programs that make up the target component. If a fourth input by the user to the target component icon is received, where, for example, the fourth input is an input to move an icon position of at least one target application program, the electronic device responds to the fourth input by updating the display style of the target component icon, where a different display style corresponds to a different layout interface shown when the target component is started. In other words, the user can select a corresponding layout interface by changing the display style of the target component icon, thereby meeting the needs of the user for different layouts in different scenarios.

Different display styles of the target component icon may be obtained by changing sorting positions of the icons of the target application programs in the target component icon, or different display styles of the target component icon may be obtained by changing a cascading relationship of the icons of the target application programs in the target component icon, or different display styles of the target component icon may be obtained by changing a layout direction of the icons of the target application programs in the target component icon. This is not specifically limited in the embodiments of this application. Optionally, a display style of the target component icon corresponds to a layout interface shown when the target component is started.

In some embodiments of this application, optionally, after target pages of the target application programs are displayed according to a preset layout interface, the user may switch the layout interface corresponding to the target page of each target application program, thereby implementing a one-tap switching function. For example, after target pages of the target application programs are displayed according to a preset layout interface, the method further includes: receiving a switching input by the user to the layout interface; and in response to the switching input, switching the layout interface corresponding to the target pages of the target application programs. In some optional implementations, a switching control may be displayed in the layout interface, and the user can perform an input to the switching control in the layout interface to switch the layout interface.

In some embodiments of this application, in a case that the display style of the target component icon is a first display style, in a first layout interface shown when the target component is started, a target page of the first target application program is displayed in full screen in the first layout interface, and icons of target application programs other than the first target application program are displayed in the first layout interface.

In other words, the first display style corresponds to the first layout interface, and if the display style of the target component icon is the first display style, the layout interface shown when the target component is started is the first layout interface. In the first layout interface, the target page of the first target application program is displayed in full screen, while for the other target application programs, only their icons are displayed. Therefore, the layout interface is suitable for focus mode, where the user focuses more on information in the first target application program.

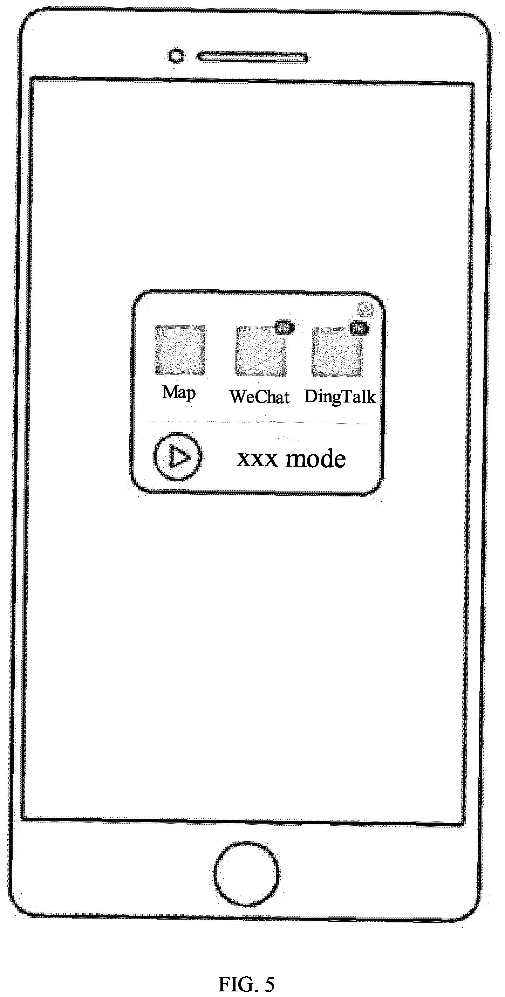

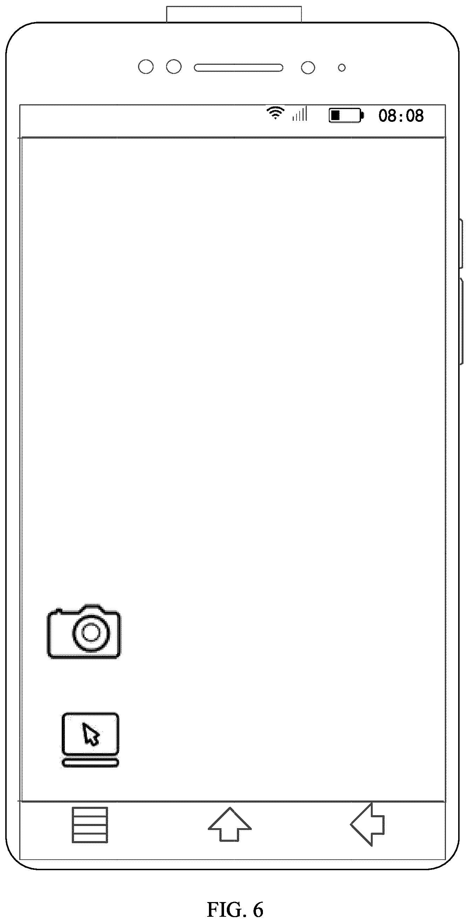

Referring to FIG. 5 and FIG. 6, FIG. 5 is a schematic diagram of a first display style according to an embodiment of this application; and FIG. 6 is a schematic diagram of a first layout interface according to an embodiment of this application. As shown in FIG. 5 and FIG. 6, in some embodiments of this application, for example, a target component icon contains icons of three target application programs, and the icons of the three target application programs are horizontally spaced out, that is, in a first display style. After the target component is started, a first layout interface is displayed. In the first layout interface, a target page of one target application program occupies the entire screen, while the other two target application programs are displayed in the form of icons only on the lower left of the screen. The target application program displayed in full screen may default to the target application program with an icon ranked first in the target component icon, that is, the main application program. For example, this target application program displayed in full screen is a map, the user is in a driving mode, and the map takes up most of the screen of the electronic device, making it easy for the user to view the map. To further access a target page of another target application program, the user can tap a target application program icon displayed at the lower left of the screen.

In some other embodiments of this application, in a case that the display style of the target component icon is a second display style, in a second layout interface shown when the target component is started, target pages of the target application programs are displayed in separate regions in the second layout interface.

In other words, the second display style corresponds to the second layout interface, and if the display style of the target component icon is the second display style, the layout interface shown when the target component is started is the second layout interface. In the second layout interface, the target pages of the target application programs are displayed in separate regions in the screen of the electronic device. Therefore, this layout interface allows users to follow the content of multiple application programs simultaneously.

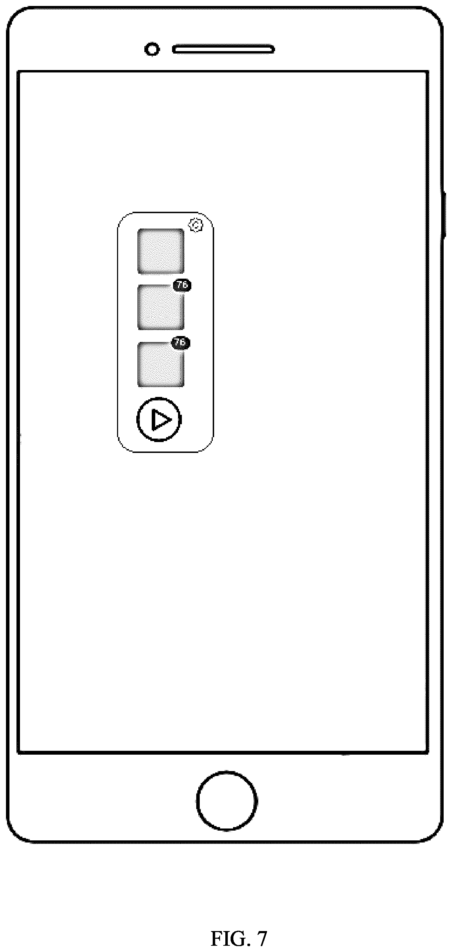

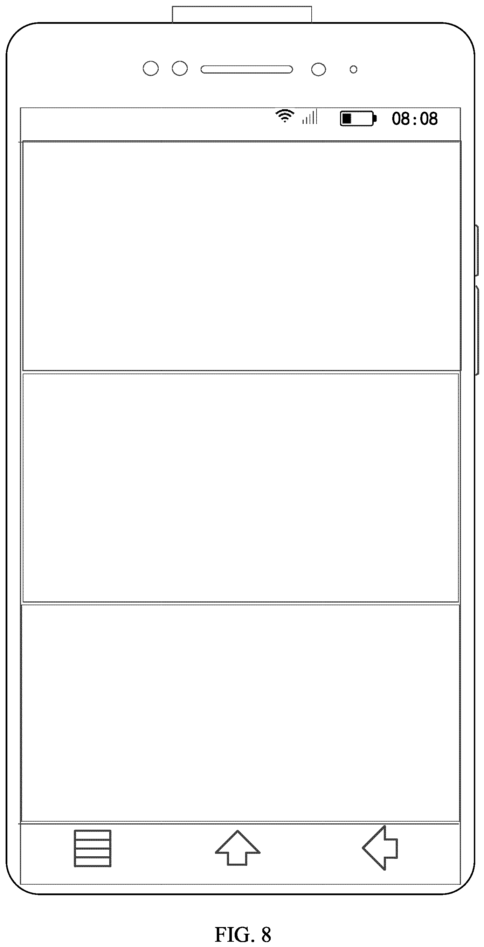

Referring to FIG. 7 and FIG. 8, FIG. 7 is a schematic diagram of a second display style according to an embodiment of this application; and FIG. 8 is a schematic diagram of a second layout interface according to an embodiment of this application. As shown in FIG. 7 and FIG. 8, in some embodiments of this application, for example, a target component icon contains icons of three target application programs, and the icons of the three target application programs are vertically spaced out, that is, in a second display style. After the target component is started, a second layout interface is displayed. In the second layout interface, target pages of the three target application programs are displayed from top to bottom, taking up the entire screen of the electronic device together, where an area of a display region for each of the three target application programs may be the same or different and may be specifically set according to actual requirements. The user may touch-and-hold and drag a target page of a target application program to change the display position of the target page of the target application program. The user may alternatively drag a boundary of a target page of a target application program to zoom in or out the target page, with other target pages adaptively displayed based on this, for example, synchronously zooming out or in.

In some further embodiments of this application, in a case that the display style of the target component icon is a third display style, in a third layout interface shown when the target component is started, a target page of at least one target application program is displayed on a first layer of the third layout interface, and a target page of at least another target application program is displayed on a second layer of the third layout interface, where the first layer is located below the second layer, and the second layer is a partially transparent layer.

In other words, the third display style corresponds to the third layout interface, and if the display style of the target component icon is the third display style, the layout interface shown when the target component is started is the third layout interface. In the third layout interface, a target page of at least one target application program is displayed in a separate region on the first layer, and a target page of at least another target application program is displayed on the second layer of the third layout interface. Since the second layer is a partially transparent layer, content on the first layer can be seen through the content on the second layer. Therefore, on this layout interface, the target pages of the target application programs have a hierarchy, that is, there is a distinction between primary and secondary layers. The second layer is the main layer, and the first layer is the secondary layer. Therefore, this layout interface is suitable for multitasking mode, where the user can focus on the content of some target application programs while still being aware of the content of other target application programs.

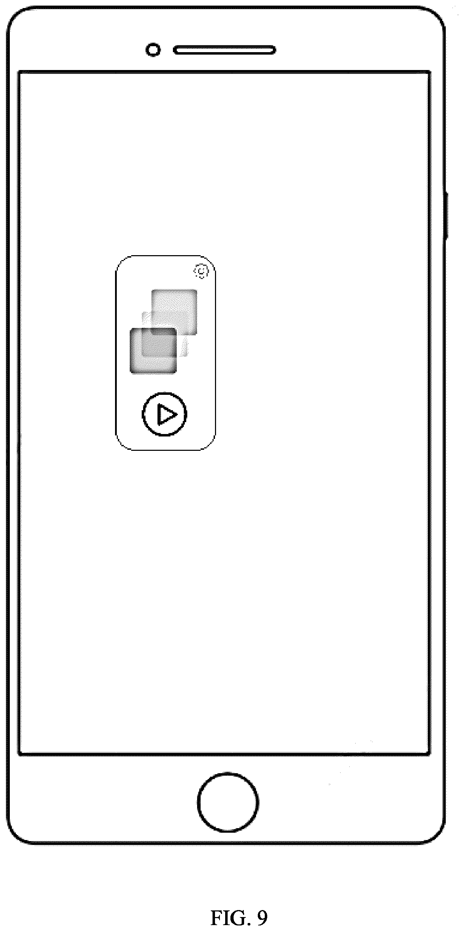

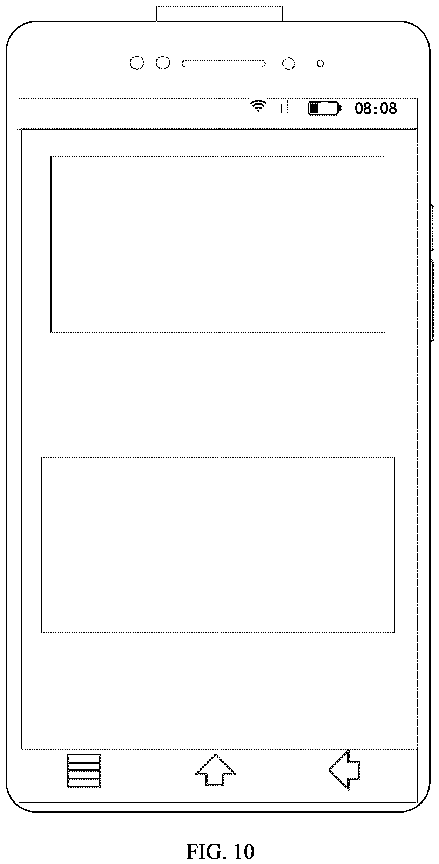

Referring to FIG. 9 and FIG. 10, FIG. 9 is a schematic diagram of a third display style according to an embodiment of this application; and FIG. 10 is a schematic diagram of a third layout interface according to an embodiment of this application. As shown in FIG. 9 and FIG. 10, in some embodiments of this application, for example, a target component icon contains icons of three target application programs, and the icons of the three target application programs are cascaded, that is, in a third display style. After the target component is started, a third layout interface is displayed. In the third layout interface, a target page of one of the target application programs is displayed on a first layer, while target pages of the other two target application programs are displayed in separate regions on a second layer. In addition, the two target pages are displayed with translucency, so that the content of the target pages in the first layer can be seen through the two target pages. The target application program displayed on the first layer can default to the target application program with an icon located at the bottom of the target component icon, that is, the main application program. For example, the target application program displayed on the first layer is a playback application program, while the target application program displayed on the second layer is an instant messaging application program. The user can play the video at the same time for instant messaging. In this case, a secondary focus is on the video, and a main focus is on the instant messaging page. The user can send and receive messages without interrupting the video playback, achieving a multitasking effect.

In some embodiments of this application, in a case that the display style of the target component icon is the first display style, after in response to the second input, starting the target component and displaying the target pages of the target application programs according to a preset layout interface, the method further includes:
receiving a fifth input by a user to an icon of a second target application program in target application programs other than the first target application program; and
in response to the fifth input, voice broadcasting a message received in the second target application program, or displaying a target page of the second target application program.

In this embodiment, in a case that the display style of the target component icon is the first display style, after the target component is started, if a fifth input by the user to the icon of the second target application program in the target application programs other than the first target application program is received, where, for example, the fifth input is an input of tapping the icon of the second target application program in the first layout interface, the electronic device responds to the fifth input by voice broadcasting a message received in the second target application program, or displaying the target page of the second target application program. Optionally, if the second target application program is an instant messaging application program, a policy for voice playback or a policy for displaying a target page is implemented; or if the second target application program is not an instant messaging application program, a policy for displaying a target page is implemented. As a result, the user can quickly view the target page of the second target application program, and when there is no need to view the target page of the second target application program, the second target application program only displays its icon, reducing occlusion of the target page displayed in full screen.

In some embodiments of this application, when the second target application program is an instant messaging application program, if there are unread messages, an identifier such as a red corner marker appears above or below the icon of the second target application program to show that there are unread messages. The fifth input may be an input of dragging the icon of the second target application program to the left, in which case the electronic device responds to the fifth input by turning on the voice broadcasting mode and broadcasts the unread messages; or, the fifth input may be an input of dragging the icon of the second target application program upward, in which case the electronic device responds to the fifth input by jumping to display a chat window corresponding to the unread messages.

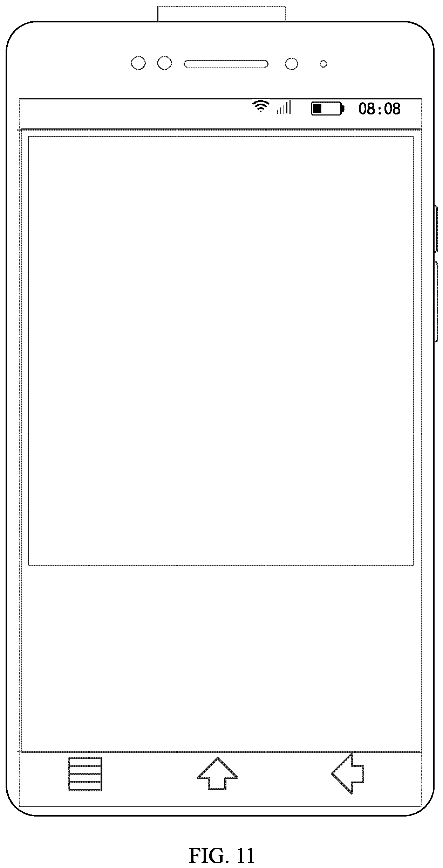

Referring to FIG. 11, FIG. 11 is a schematic diagram of a target page of a second target application program according to an embodiment of this application. As shown in FIG. 11, after receiving the fifth input by the user to the icon of the second target application program, the electronic device responds to the fifth input by displaying the target page of the second target application program, where the second target application program is an instant messaging application program, and the target page is a chat interface.

In some embodiments of this application, in a case that at least one target application program in the target component is an instant messaging application program, after in response to the second input, starting the target component and displaying the target pages of the target application programs according to a preset layout interface, the method further includes:
generating and displaying at least one topic based on relevance of messages received in the instant messaging application program;
voice broadcasting messages pertaining to each of the topics;
receiving a sixth input by the user to a target topic; and
in response to the sixth input, generating content of a reply and sending the content of the reply within a target chat window of a target instant messaging application program, where the target chat window is determined based on the target topic.

In other words, if at least one target application program in the target component is an instant messaging application program, after the target component is started, according to the relevance of content between messages received in the instant messaging application program, the received messages may be categorized in order to generate at least one topic, all topics being different from each other, and the at least one topic is displayed on the top of the layout interface, which may be specifically above a target page of a corresponding target application program in the layout interface. Optionally, topics can be sorted based on the content of the messages, senders of the messages, and usage habits or settings of the user (such as starred users, recent contacts, frequently used contacts, active group chats, and the like), and the generated topics are at the top of the layout interface.

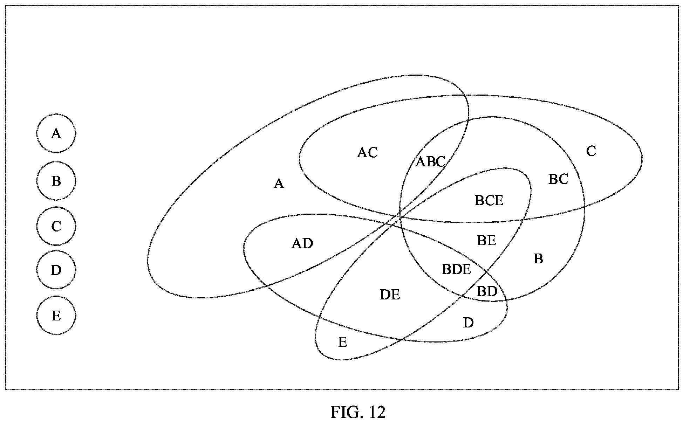

Referring to FIG. 12, FIG. 12 is a schematic diagram of relevance of messages according to an embodiment of this application. As shown in FIG. 12, if at least one target application program (an instant messaging application program) receives a message A, a message B, a message C, a message D, and a message E, a topic may be created based on the relevance of the content between the message A, the message B, the message C, the message D, and the message E.

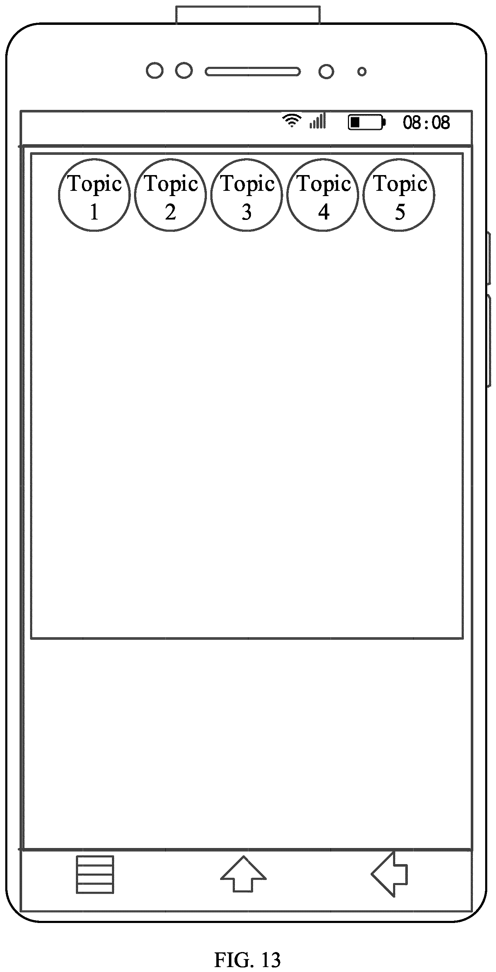

Referring to FIG. 13, FIG. 13 is a schematic diagram of topics according to an embodiment of this application. As shown in FIG. 13, in some embodiments of this application, multiple topics generated based on the received messages are displayed at the top of the layout interface, and the multiple topics are displayed horizontally, including topic 1, topic 2, topic 3, topic 4, and topic 5.

Later, the messages pertaining to each topic can be voice-played one by one, which means that the messages received by each instant messaging application program are voice-played according to the classification of the topic, thereby eliminating the cumbersome process of the user viewing the messages one by one. Optionally, whether to voice broadcast may be determined by the user, such as the user controlling the electronic device via a voice command to voice broadcast, or the user controlling the electronic device via a touch input to voice broadcast. Optionally, it is possible to wait for a certain amount of time after voice broadcasting all messages about a topic for the user to reply to the topic, or it is possible to ask the user by voice whether to reply to the topic, and if the user does not reply to the topic, a message of the next topic is broadcast directly.

During voice broadcasting a message about a topic or after ending voice broadcasting of one or more messages about a topic, if a sixth input by the user to a target topic is received, where, for example, the sixth input is a voice input by the user, the electronic device responds to the sixth input by generating content of a reply, that is, converting the voice of the user to text and sending the content of the reply within a target chat window of the target instant messaging application program, where the target chat window is determined based on the target topic, for example, by determining which chat windows the messages pertaining to the target topic come from, the target chat window can be determined. As can be seen, one topic can correspond to one target application program or multiple target application programs, and one topic can correspond to one target chat window (contact) within a target application program or multiple target chat windows (contacts) within a target application program, so that a single reply can be used to reply multiple contacts, greatly improving the efficiency of message processing.

In some embodiments of this application, after the generating at least one topic based on relevance of messages received in the instant messaging application program, the method further includes:
in case of reception of a new message from the instant messaging application program, performing matching between the new message and each of the topics; and
in a case that the new message meets a matching condition with a first topic, categorizing the new message under the first topic; or in a case that the new message does not meet a matching condition with any existing topic, generating a new topic based on the new message.

In the embodiments, if a new message is received by an instant messaging application program, the new message is matched with an existing topic, where if the new message meets a matching condition with a first topic, for example, the relevance of content being greater than a preset threshold, the new message is determined to be of a same category, and the new message is incorporated into the first topic, whereas if the new message does not meet a matching condition with any existing topic, for example, the relevance of content being less than a preset threshold, the new message is determined to be not of a same category, and a new topic is generated based on the new message and displayed at the top of the target page.

In some other embodiments of this application, after in response to the sixth input, generating content of a reply and sending the content of the reply within a target chat window of a target instant messaging application program, the method further includes:
in a case that the relevance of content of any two replies meets a preset condition, merging two target topics corresponding to the content of the two replies into one topic.

In other words, after the user replies to two target topics, the relevance of content of the two replies that the user provided when replying to the two target topics can be determined. If the relevance of content between the two replies is greater than a preset threshold, it means that the two target topics are more similar or even the same, the two target topics can be merged into one topic, thereby reducing the number of topics.

In some embodiments of this application, after the generating and displaying at least one topic based on relevance of messages received in the instant messaging application program, the method further includes:
sorting the at least one topic based on at least one of the following:
importance of a sender of a message in the topic, importance of a message in the topic, and frequency of contact with a sender of a message in the topic.

For example, in case of many generated topics, the generated topics can be sorted in order to facilitate users to view and know the messages in each topic. When sorting is performed on at least one generated topic, the sorting can be performed based on importance of a sender of a message in a topic, importance of a message in a topic, frequency of contact with a sender of a message in a topic, or the like. For example, if the sender of a message in a topic is starred, indicating the high importance of the sender, the topic containing such a message should be ranked higher. For another example, when sorting is performed based on the importance of a message in a topic, if the message is determined to be a work message based on the message content, its importance is high and a corresponding topic should be ranked higher; if the message is determined to be a family message, its importance is secondary and a corresponding topic is ranked relatively low; or if the message is determined to be an entertainment message based on the message content, its importance is the lowest and a corresponding topic is ranked last. For yet another example, for a higher frequency of contact with a sender of a message in a topic, a corresponding topic should be ranked higher, and conversely, for a lower frequency of contact with a sender of a message in a topic, a corresponding topic should be ranked lower. Certainly, it is also possible to combine the various sorting methods described above to perform a comprehensive sorting to determine a final order of topics. Since there are many messages within a topic, final ranking can also be obtained by scoring messages based on the importance of the sender of a message, the importance of a message in a topic, the frequency of contact with the sender of a message, or the like, and performing weighted summation.

In brief, in this embodiment of this application, target application programs are selected for building a target component, and initial pages of the target application programs in the target component are set as target pages, so that when the target component is started, the target pages of all target application programs in the target component are displayed according to a preset layout interface. In this way, various application program functions can be implemented through a single target component, and the user does not need to cumbersomely switch between a plurality of application programs. This simplifies the process of human-machine interaction and meets the requirements in multiple usage scenarios for the user.

It should be noted that the interaction method provided in the embodiments of this application may be executed by an interaction apparatus, or a control module for executing the interaction method in the interaction apparatus. In the embodiments of this application, the interaction apparatus provided in the embodiments of this application is described by using the interaction apparatus performing the interaction method as an example.

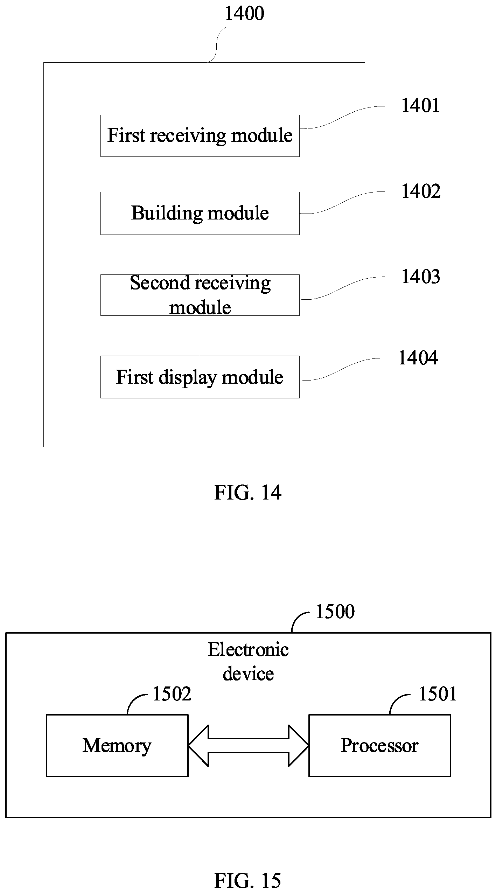

Referring to FIG. 14, FIG. 14 is a schematic structural diagram of an interaction apparatus according to an embodiment of this application. As shown in the figure, according to another aspect of this application, an interaction apparatus is further provided. The apparatus 1400 includes:
a first receiving module 1401 configured to receive a first input by a user to target application programs;
a building module 1402 configured to, in response to the first input, build a target component based on the target application programs and set preset interfaces of the target application programs as target pages, the target pages being interfaces displayed correspondingly by the target application programs after the target component is started;
a second receiving module 1403 configured to receive a second input by the user to the target component; and
a first display module 1404 configured to, in response to the second input, start the target component and display the target pages of the target application programs according to a preset layout interface.

In the embodiments of this application, target application programs are selected for building a target component, and initial pages of the target application programs in the target component are set as target pages, so that when the target component is started, the target pages of all target application programs in the target component are displayed according to a preset layout interface. In this way, various application program functions can be implemented through a single target component, and the user does not need to cumbersomely switch between multiple application programs. This simplifies the process of human-machine interaction and meets the requirements in multiple usage scenarios for the user.

Optionally, the apparatus further includes:
a third receiving module configured to receive a third input by the user to a first target application program in the target component; and
an association module configured to, in response to the third input, associate a first function of the first target application program with a second target application program in the target component, the first function being triggered in the second target application program.

Optionally, the apparatus further includes:
a second display module configured to display a target component icon, the target component icon containing icons of the target application programs;
a fourth receiving module configured to receive a fourth input by the user to the target component icon; and
an update module configured to, in response to the fourth input, update a display style of the target component icon, where a different display style corresponds to a different layout interface shown when the target component is started.

Optionally, in a case that the display style of the target component icon is a first display style, in a first layout interface shown when the target component is started, a target page of the first target application program is displayed in full screen in the first layout interface, and icons of target application programs other than the first target application program are displayed in the first layout interface; and/or
in a case that the display style of the target component icon is a second display style, in a second layout interface shown when the target component is started, target pages of the target application programs are displayed in separate regions in the second layout interface; and/or
in a case that the display style of the target component icon is a third display style, in a third layout interface shown when the target component is started, a target page of at least one target application program is displayed on a first layer of the third layout interface, and a target page of at least another target application program is displayed on a second layer of the third layout interface, where the first layer is located below the second layer, and the second layer is a partially transparent layer.

Optionally, in a case that the display style of the target component icon is a first display style, the apparatus further includes:
a fifth receiving module configured to receive a fifth input by a user to an icon of a second target application program in target application programs other than the first target application program; and
a response module configured to, in response to the fifth input, voice broadcast a message received in the second target application program, or display a target page of the second target application program.

Optionally, in a case that at least one target application program in the target component is an instant messaging application program, the apparatus further includes:
a generation module configured to generate and display at least one topic based on relevance of messages received in the instant messaging application program;
a broadcast module configured to voice broadcast messages attributed to each of the topics;
a sixth receiving module configured to receive a sixth input by the user to a target topic; and
a reply module configured to, in response to the sixth input, generate content of a reply and send the content of the reply within a target chat window of a target instant messaging application program, where the target chat window is determined based on the target topic.

Optionally, the apparatus further includes:
a matching module configured to, in case of reception of a new message from the instant messaging application program, perform matching between the new message and each of the topics; and
a categorization module configured to, in a case that the new message meets a matching condition with a first topic, categorize the new message under the first topic; or in a case that the new message does not meet a matching condition with any existing topic, generate a new topic based on the new message.

Optionally, the apparatus further includes:
a merging module configured to, in a case that the relevance of content of any two replies meets a preset condition, merge two target topics corresponding to the content of the two replies into one topic.

Optionally, the apparatus further includes:
a sorting module configured to sort the at least one topic based on at least one of the following:
importance of a sender of a message in the topic, importance of a message in the topic, and frequency of contact with a sender of a message in the topic.

The interaction apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a personal computer (personal computer, PC), a television (television, TV), a teller machine, a self-service machine, or the like. This is not specifically limited in the embodiments of this application.

The interaction apparatus in this embodiment of this application may be an apparatus having an operating system. The operating system may be an Android (Android) operating system, may be an iOS operating system, or may be another possible operating system. This is not specifically limited in this embodiment of this application.

The interaction apparatus provided in this embodiment of this application can implement the processes implemented in the method embodiments of FIG. 1 to FIG. 13. To avoid repetition, details are not repeated herein.

Optionally, as shown in FIG. 15, an embodiment of this application further provides an electronic device 1500, including a processor 1501, a memory 1502, and a program or instructions stored in the memory 1502 and capable of running on the processor 1501, where when the program or instructions are executed by the processor 1501, the processes of the foregoing embodiments of the interaction method are implemented, with the same technical effects achieved. To avoid repetition, details are not repeated herein.

It should be noted that the electronic device in this embodiment of this application includes the foregoing mobile electronic device and non-mobile electronic device.

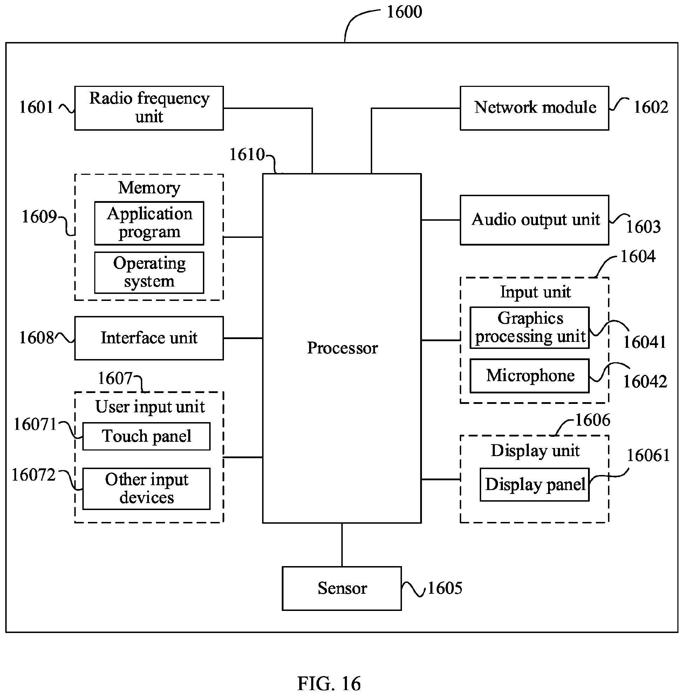

FIG. 16 is a schematic diagram of a hardware structure of an electronic device according to an embodiment of this application.

The electronic device 1600 includes but is not limited to components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

It can be understood by those skilled in the art that the electronic device 1600 may further include a power supply (for example, a battery) supplying power to the components. The power supply may be logically connected to the processor 1610 via a power management system, so that functions such as charge management, discharge management, and power consumption management are implemented via the power management system. The structure of the electronic device shown in FIG. 16 does not constitute a limitation on the electronic device. The electronic device may include more or fewer components than those shown in the figure, or some components may be combined, or there may be a different component layout. Details are not described now.

The user input unit 1607 is configured to receive a first input by a user to target application programs.

The processor 1610 is configured to, in response to the first input, build a target component based on the target application programs and set preset interfaces of the target application programs as target pages, the target pages being interfaces displayed correspondingly by the target application programs after the target component is started.

The user input unit 1607 is further configured to receive a second input by the user to the target component.

The processor 1610 is configured to, in response to the second input, start the target component.

The display unit 1606 is configured to, in response to the second input, display the target pages of the target application programs according to a preset layout interface.

In the embodiments of this application, target application programs are selected for building a target component, and initial pages of the target application programs in the target component are set as target pages, so that when the target component is started, the target pages of all target application programs in the target component are displayed according to a preset layout interface. In this way, various application program functions can be implemented through a single target component, and the user does not need to cumbersomely switch between multiple application programs. This simplifies the process of human-machine interaction and meets the requirements in multiple usage scenarios for the user.

Optionally, the user input unit 1607 is further configured to receive a third input by the user to a first target application program in the target component.

The processor 1610 is configured to, in response to the third input, associate a first function of the first target application program with a second target application program in the target component, the first function being triggered in the second target application program.

Optionally, the display unit 1606 is further configured to display a target component icon, the target component icon containing icons of the target application programs.

The user input unit 1607 is further configured to receive a fourth input by the user to the target component icon.

The display unit 1606 is further configured to, in response to the fourth input, update a display style of the target component icon, where a different display style corresponds to a different layout interface shown when the target component is started.

Optionally, in a case that the display style of the target component icon is a first display style, in a first layout interface shown when the target component is started, a target page of the first target application program is displayed in full screen in the first layout interface, and icons of target application programs other than the first target application program are displayed in the first layout interface; and/or
in a case that the display style of the target component icon is a second display style, in a second layout interface shown when the target component is started, target pages of the target application programs are displayed in separate regions in the second layout interface; and/or
in a case that the display style of the target component icon is a third display style, in a third layout interface shown when the target component is started, a target page of at least one target application program is displayed on a first layer of the third layout interface, and a target page of at least another target application program is displayed on a second layer of the third layout interface, where the first layer is located below the second layer, and the second layer is a partially transparent layer.

Optionally, in a case that the display style of the target component icon is a first display style:
the user input unit 1607 is further configured to receive a fifth input by a user to an icon of a second target application program in target application programs other than the first target application program; and
the audio output unit 1603 is configured to, in response to the fifth input, voice broadcast a message received in the second target application program, or display a target page of the second target application program.

Optionally, in a case that at least one target application program in the target component is an instant messaging application program:
the processor 1610 is further configured to generate and display at least one topic based on relevance of messages received in the instant messaging application program;
the audio output unit 1603 is further configured to voice broadcast messages attributed to each of the topics;
the user input unit 1607 is further configured to receive a sixth input by the user to a target topic; and
the processor 1610 is further configured to, in response to the sixth input, generate content of a reply and send the content of the reply within a target chat window of a target instant messaging application program, where the target chat window is determined based on the target topic.

Optionally, the processor 1610 is further configured to, in case of reception of a new message from the instant messaging application program, perform matching between the new message and each of the topics.

The processor 1610 is further configured to, in a case that the new message meets a matching condition with a first topic, categorize the new message under the first topic; or in a case that the new message does not meet a matching condition with any existing topic, generate a new topic based on the new message.

Optionally, the processor 1610 is further configured to, in a case that the relevance of content of any two replies meets a preset condition, merge two target topics corresponding to the content of the two replies into one topic.

Optionally, the processor 1610 is further configured to sort the at least one topic based on at least one of the following:
importance of a sender of a message in the topic, importance of a message in the topic, and frequency of contact with a sender of a message in the topic.

It should be understood that in an embodiment of this application, the input unit 1604 may include a graphics processing unit (Graphics Processing Unit, GPU) 16041 and a microphone 16042. The graphics processing unit 16041 processes image data of a static picture or a video obtained by an image capture apparatus (such as a camera) in a video capture mode or an image capture mode. The display unit 1606 may include a display panel 16061. The display panel 16061 may be configured in a form of a liquid crystal display, an organic light-emitting diode display, or the like. The user input unit 1607 includes a touch panel 16071 and other input devices 16072. The touch panel 16071 is also referred to as a touchscreen. The touch panel 16071 may include two parts: a touch detection apparatus and a touch controller. Specifically, the other input devices 16072 may include but are not limited to a physical keyboard, a function button (for example, volume control button or on/off button), a trackball, a mouse, and a joystick. Details are not described herein. The memory 1609 may be configured to store a software program and various data which include but are not limited to an application program and an operating system. The processor 1610 may integrate an application processor and a modem processor. The application processor mainly processes an operating system, a user interface, an application program, and the like. The modem processor mainly processes wireless communication. It can be understood that the modem processor may alternatively be not integrated in the processor 1610.

An embodiment of this application further provides a readable storage medium. The readable storage medium has a program or instructions stored thereon, and when the program or instructions are executed by a processor, the processes of the foregoing embodiments of the interaction method are implemented, with the same technical effects achieved. To avoid repetition, details are not repeated herein.

The processor is the processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

Another embodiment of this application provides a chip. The chip includes a processor and a communication interface, the communication interface is coupled to the processor, and the processor is configured to run a program or instructions to implement the processes of the foregoing embodiments of the interaction method, with the same technical effects achieved. To avoid repetition, details are not repeated herein.

It should be understood that the chip mentioned in an embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the methods in the foregoing embodiments can be implemented through software on a necessary general hardware platform or certainly through hardware only, but in many cases, the former is the more preferred implementation. Based on such an understanding, the technical solutions of this application essentially, or the part contributing to the prior art may be implemented in a form of a computer program product. The computer program product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. An interaction method, comprising:
receiving a first input by a user to target application programs;
in response to the first input, building a target component based on the target application programs and setting preset interfaces of the target application programs as target pages, the target pages being interfaces displayed correspondingly by the target application programs after the target component is started;
receiving a second input by the user to the target component; and
in response to the second input, starting the target component and displaying the target pages of the target application programs according to a preset layout interface.

2. The method according to claim 1, after the building a target component based on the target application programs, further comprising:
receiving a third input by the user to a first target application program in the target component; and
in response to the third input, associating a first function of the first target application program with a second target application program in the target component, the first function being triggered in the second target application program.

3. The method according to claim 1, after the building a target component based on the target application programs, further comprising:
displaying a target component icon, the target component icon containing icons of the target application programs;
receiving a fourth input by the user to the target component icon; and
in response to the fourth input, updating a display style of the target component icon, wherein a different display style corresponds to a different layout interface shown when the target component is started.

4. The method according to claim 3, wherein in a case that the display style of the target component icon is a first display style, in a first layout interface shown when the target component is started, a target page of the first target application program is displayed in full screen in the first layout interface, and icons of target application programs other than the first target application program are displayed in the first layout interface; and/or
in a case that the display style of the target component icon is a second display style, in a second layout interface shown when the target component is started, target pages of the target application programs are displayed in separate regions in the second layout interface; and/or
in a case that the display style of the target component icon is a third display style, in a third layout interface shown when the target component is started, a target page of at least one target application program is displayed on a first layer of the third layout interface, and a target page of at least another target application program is displayed on a second layer of the third layout interface, wherein the first layer is located below the second layer, and the second layer is a partially transparent layer.

5. The method according to claim 4, wherein in a case that the display style of the target component icon is the first display style, after in response to the second input, starting the target component and displaying the target pages of the target application programs according to a preset layout interface, the method further comprises:
receiving a fifth input by a user to an icon of a second target application program in target application programs other than the first target application program; and
in response to the fifth input, voice broadcasting a message received in the second target application program, or displaying a target page of the second target application program.

6. The method according to claim 1, wherein in a case that at least one target application program in the target component is an instant messaging application program, after in response to the second input, starting the target component and displaying the target pages of the target application programs according to a preset layout interface, the method further comprises:
generating and displaying at least one topic based on relevance of messages received in the instant messaging application program;
voice broadcasting messages pertaining to each of the topics;
receiving a sixth input by the user to a target topic; and
in response to the sixth input, generating content of a reply and sending the content of the reply within a target chat window of a target instant messaging application program, wherein the target chat window is determined based on the target topic.

7. The method according to claim 6, wherein after the generating and displaying at least one topic based on relevance of messages received in the instant messaging application program, the method further comprises:
in case of reception of a new message from the instant messaging application program, performing matching between the new message and each of the topics; and
in a case that the new message meets a matching condition with a first topic, categorizing the new message under the first topic; or in a case that the new message does not meet a matching condition with any existing topic, generating a new topic based on the new message.

8. The method according to claim 6, wherein after in response to the sixth input, generating content of a reply and sending the content of the reply within a target chat window of a target instant messaging application program, the method further comprises:
in a case that the relevance of content of any two replies meets a preset condition, merging two target topics corresponding to the content of the two replies into one topic.

9. The method according to claim 6, wherein after the generating and displaying at least one topic based on relevance of messages received in the instant messaging application program, the method further comprises:
sorting the at least one topic based on at least one of the following:
importance of a sender of a message in the topic, importance of a message in the topic, and frequency of contact with a sender of a message in the topic.

10. An interaction apparatus, comprising:
a first receiving module configured to receive a first input by a user to target application programs;
a building module configured to, in response to the first input, build a target component based on the target application programs and set preset interfaces of the target application programs as target pages, the target pages being interfaces displayed correspondingly by the target application programs after the target component is started;
a second receiving module configured to receive a second input by the user to the target component; and
a first display module configured to, in response to the second input, start the target component and display the target pages of the target application programs according to a preset layout interface.

11. The apparatus according to claim 10, further comprising:
a third receiving module configured to receive a third input by the user to a first target application program in the target component; and
an association module configured to, in response to the third input, associate a first function of the first target application program with a second target application program in the target component, the first function being triggered in the second target application program.

12. The apparatus according to claim 10, further comprising:
a second display module configured to display a target component icon, the target component icon containing icons of the target application programs;
a fourth receiving module configured to receive a fourth input by the user to the target component icon; and
an update module configured to, in response to the fourth input, update a display style of the target component icon, wherein a different display style corresponds to a different layout interface shown when the target component is started.

13. The apparatus according to claim 12, wherein in a case that the display style of the target component icon is a first display style, in a first layout interface shown when the target component is started, a target page of the first target application program is displayed in full screen in the first layout interface, and icons of target application programs other than the first target application program are displayed in the first layout interface; and/or
in a case that the display style of the target component icon is a second display style, in a second layout interface shown when the target component is started, target pages of the target application programs are displayed in separate regions in the second layout interface; and/or
in a case that the display style of the target component icon is a third display style, in a third layout interface shown when the target component is started, a target page of at least one target application program is displayed on a first layer of the third layout interface, and a target page of at least another target application program is displayed on a second layer of the third layout interface, wherein the first layer is located below the second layer, and the second layer is a partially transparent layer.

14. The apparatus according to claim 13, wherein in a case that the display style of the target component icon is a first display style, the apparatus further comprises:
a fifth receiving module configured to receive a fifth input by a user to an icon of a second target application program in target application programs other than the first target application program; and
a response module configured to, in response to the fifth input, voice broadcast a message received in the second target application program, or display a target page of the second target application program.

15. The apparatus according to claim 10, wherein in a case that at least one target application program in the target component is an instant messaging application program, the apparatus further comprises:
a generation module configured to generate and display at least one topic based on relevance of messages received in the instant messaging application program;
a broadcast module configured to voice broadcast messages attributed to each of the topics;
a sixth receiving module configured to receive a sixth input by the user to a target topic; and
a reply module configured to, in response to the sixth input, generate content of a reply and send the content of the reply within a target chat window of a target instant messaging application program, wherein the target chat window is determined based on the target topic.

16. The apparatus according to claim 15, further comprising:
a matching module configured to, in case of reception of a new message from the instant messaging application program, perform matching between the new message and each of the topics; and
a categorization module configured to, in a case that the new message meets a matching condition with a first topic, categorize the new message under the first topic; or in a case that the new message does not meet a matching condition with any existing topic, generate a new topic based on the new message.

17. The apparatus according to claim 15, further comprising:
a merging module configured to, in a case that the relevance of content of any two replies meets a preset condition, merge two target topics corresponding to the content of the two replies into one topic.

18. The apparatus according to claim 15, further comprising:
a sorting module configured to sort the at least one topic based on at least one of the following:
importance of a sender of a message in the topic, importance of a message in the topic, and frequency of contact with a sender of a message in the topic.

19. An electronic device, comprising a processor, a memory, and a program or instructions stored in the memory and capable of running on the processor, wherein when the program or instructions are executed by the processor, the steps of the interaction method according to any one of claims 1 to 9 are implemented.

20. A readable storage medium, wherein the readable storage medium has a program or instructions stored thereon, and when the program or the instructions are executed by a processor, the steps of the interaction method according to any one of claims 1 to 9 are implemented.

21. A computer program product, wherein the program product is executed by at least one processor to implement the method according to any one of claims 1 to 9.
